Europäisches Patentamt

European Patent Office

Office européen des brevets

(11) Veröffentlichungsnummer: **0 061 083**
**B1**

(12) **EUROPÄISCHE PATENTSCHRIFT**

(45) Veröffentlichungstag der Patentschrift:
**04.06.86**

(21) Anmeldenummer: **82101978.3**

(22) Anmeldetag: **12.03.82**

(51) Int. Cl.⁴: **A 01 D 23/02**

(54) **Feinköpfer für Hackfrüchte.**

(30) Priorität: **19.03.81 DK 1241/81**

(43) Veröffentlichungstag der Anmeldung:
**29.09.82 Patentblatt 82/39**

(45) Bekanntmachung des Hinweises auf die Patenterteilung:
**04.06.86 Patentblatt 86/23**

(84) Benannte Vertragsstaaten:
**AT BE CH DE FR GB LI NL**

(56) Entgegenhaltungen:
**DE - U - 7 615 531**
**DK - C - 21 493**
**FR - A - 1 346 781**
**FR - E - 88 100**
**US - A - 1 389 708**
**US - A - 2 212 751**

(73) Patentinhaber: **Rasmussen, Hans Carsten, Krarup pr., DK-5750 Ringe (DK)**

(72) Erfinder: **Rasmussen, Hans Carsten, Krarup pr., DK-5750 Ringe (DK)**

(74) Vertreter: **Koepsell, Helmut, Dipl.-Ing., Mittelstrasse 7, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft einen Feinköpfer für Hackfrüchte, insbesondere Rüben, der eine um eine quer zur Fahrtrichtung verlaufende Achse auf- und abschwenkbar angebrachte Stange sowie einen Fühler und ein Messer aufweist, wobei der Fühler und das Messer von einem Parallelogramm getragen sind.

Feinköpfer werden dazu benutzt, Hackfrüchte, insbesondere Rüben, die mit Rübenblatterntemaschinen oder rotierendem Köpfer geköpft worden sind, nachzubehandeln.

Bekannte Feinköpfer, z.B. jene gemäss DK-C-21 491, weisen einen Fühler auf, der nur derart eingestellt werden kann, dass das Messer von allen Rüben Abschnitte gleicher Grösse abschneidet. Dies ist darauf zurückzuführen, dass Fühler und Messer gegenüber dem Boden gleiche Bewegungen ausführen. Dies hat zur Folge, dass von allen gegenüber dem Boden verhältnismässig hochstehenden Rüben, die bereits durch die vorangegangene Behandlung vollständig geköpft worden waren, ein scheibenförmiger Abschnitt beträchtlicher Dicke abgetrennt wird. Dies stellt eine Verschwendung wertvoller Substanz dar. Hingegen wird von tiefer im Boden sitzenden Rüben, die nach der vorangegangene Behandlung immer noch verhältnismässig viel Blätter tragen, zu wenig abgetrennt, so dass auch nach der Behandlung durch den Feinköpfer immer noch Blattreste an der Rübe verbleiben.

Ferner ist aus FR-A-1 346 781 ein Feinkörper für Hackfrüchte bekannt, bei welchem Fühler und Messer jeweils von getrennten Parallelogrammen getragen sind. Diese Ausführung ist insbesondere durch das Vorhandensein zweier Parallelogramme kompliziert und aufwendig.

Der Erfindung liegt die Aufgabe zugrunde, einen derartigen Feinköpfer insbesondere bezüglich der Parallelogramm-Konstruktion einfacher auszuführen, so dass er betriebssicher und auch in der Herstellung billig ist.

Zur Lösung dieser Aufgabe schlägt die Erfindung vor, dass die Stange mit dem starr an ihr befestigte Fühler als bewegliche untere, gegenüber der Horizontalen schwach geneigten Stange in dem Gelenkparallelogramm ausgebildet ist, wobei die in Fahrtrichtung vorn gelegene Parallelogrammseite unbeweglich bezüglich der Tragvorrichtung des Zugfahrzeuges und zur Vertikalen schwach geneigt angeordnet ist, und dass die dieser unbeweglichen Parallelogrammseite gegenüberliegende Parallelogrammseite unterhalb eines sie mit der Stange verbindenden Gelenks das Messer in waagerechter Klingenstellung trägt.

Die erfindungsgemässe Ausgestaltung hat zur Folge, dass mit zunehmender Neigung der beweglichen unteren Stange gegenüber der Horizontalen der Abstand zwischen Messer und tiefstliegendem Punkt des Fühlers, dessen Höhenlage durch das Niveau des oberen Endes der Rübe bestimmt wird, grösser wird mit dem Ergebnis, dass auch die Stärke des von der Rübe abzuschneidenden Abschnittes zunimmt. Umgekehrt gilt, dass eine höher aus dem Boden herausragende Rübe die untere Stange über den auf der Oberseite der Rübe entlanggleitenden Fühler nach oben verschwenkt mit dem Ergebnis, dass der Abstand zwischen Messer zum Tiefstliegenden Punkt des Fühlers und somit zur Oberseite der Rübe kleiner wird und somit auch nur ein entsprechend kleinerer Abschnitt von der Rübe abgetrennt wird.

In der Zeichnung ist ein Ausführungsbeispiel der Erfindung dargestellt. Es zeigen:

Fig. 1 eine Ausführungsform des erfindungsgemässen Feinköpfers mit dem Messer in einer unteren Stellung;

Fig. 2 den Feinköpfer gemäss Fig. 1 mit dem Messer in einer oberen Stellung.

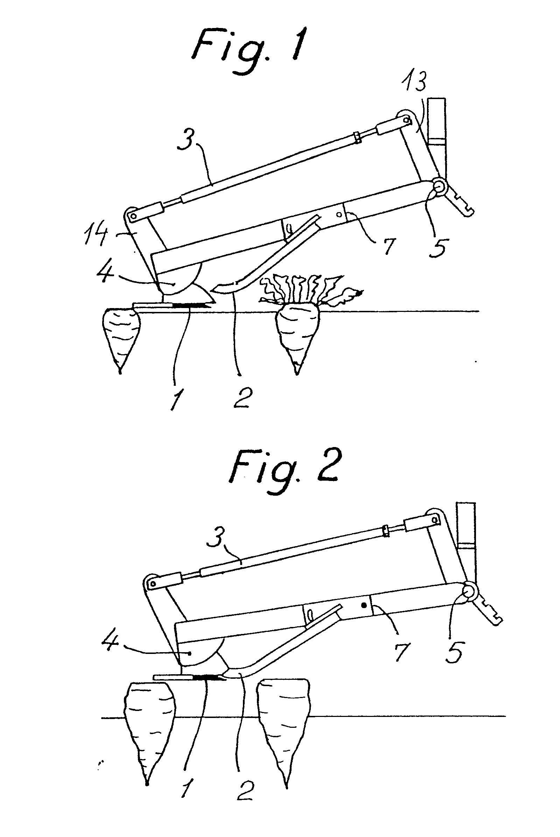

In beiden Figuren ist rechts das Ergebnis der Behandlung durch eine Rübenblatterntemaschine dargestellt. Es handelt sich einmal um ein vollständiges Köpfen im Falle einer hoch im Erdboden sitzenden Rübe (Fig. 2) und zum anderen um ein unvollständiges Köpfen einer tiefer sitzenden Rübe (Fig. 1).

Der in der Zeichnung im Schema dargestellte Feinköpfer ist mittels des Aufhängepunktes 5 an einem nicht gezeigten Ackerschlepper, einer Rübenblatterntemaschine oder auf einem ähnlichen Gerät anbringbar. Er weist ein Gelenkviereck mit zwei gegenüber der Waagerechten schwach geneigten Gelenkstange 7 und 3 auf, wobei die Länge der letztgenannten Stange einstellbar ist, sowie zwei gegenüber der Vertikalen relativ schwach geneigte Stangen 13 und 14, von denen die von den Aufhängepunkten des Gelenkviereckes abgekehrte Stange 14 unterhalb eines sie mit der Stange 7 verbindenden Gelenkes 4 ein Messer 1 trägt.

In fester Verbindung mit der Stange 7 ist ein Fühler 2 vorgesehen, dessen niedrigster Punkt bei nahezu horizontaler Position der Stange 7 sich in derselben Höhe wie das Messer 1 befindet (Fig. 2).

Ein Vergleich mit Fig. 1 zeigt, dass bei gegenüber der Horizontalen geneigten Stange 7 das Messer 1 tiefer als der niedrigste Punkt des Fühlers 2 liegt.

Im Betrieb wird eine hoch im Boden sitzende Rübe (Fig. 2) den Fühler 1 entsprechend nach oben verschieben mit dem Ergebnis, dass sich das Messer 1 ungefähr in derselben Höhe befindet, wenn es die rechts in Fig. 2 dargestellte Rübe erreicht. Die Dicke des scheibenförmigen Abschnittes wird dementsprechend gering – bis zu Null – sein, so dass auch entsprechend wenig oder überhaupt kein Verlust an Substanz der eigentlichen Rübe eintritt.

Im Falle einer tiefer im Boden sitzenden Rübe sinkt der Fühler 2 entsprechend tiefer ab mit dem Ergebnis, dass gemäss Fig. 1 auch das Messer 1 eine tiefere Position einnimmt und demzufolge einen tiefer liegenden Schnitt ausführt. Auf diese Weise wird erreicht, dass ein ggf. dickerer scheibenförmiger Abschnitt der Rübe mit den daran noch befindlichen Blattresten abgetrennt wird. Auf diese Weise ist ohne Schwierigkeiten eine selbsttätige Einstellung des Messers 1 in Abhängigkeit von den jeweiligen Gegebenheiten erreichbar, ohne dass es dazu komplizierter oder störanfälliger Mittel bedürfte.

**Patentanspruch**

1. Feinkörper für Hackfrüchte, insbesondere Rüben, der eine um eine quer zur Fahrtrichtung verlaufende Achse auf- und abschwenkbar angebrachte Stange (7) sowie einen Fühler (2) sowie ein Messer (1) aufweist, wobei der Fühler (2) und das Messer (1) von einem Gelenkparallelogramm (7, 13, 3, 14) getragen sind, dadurch gekennzeichnet, dass die Stange (7) mit dem starr an ihr befestigten Fühler (2) als bewegliche untere, gegenüber der Horizontalen schwach geneigte Stange (7) in dem Gelenkparallelogramm (7, 13, 3, 14) ausgebildet ist, wobei die in Fahrtrichtung vorn gelegene Parallelogrammseite (13) unbeweglich bezüglich der Tragvorrichtung des Zugfahrzeuges und zur Vertikalen schwach geneigt angeordnet ist, und dass die dieser unbeweglichen Parallelogrammseite (13) gegenüberliegende Parallelogrammseite (14) unterhalb eines sie mit der Stange (7) verbindenden Gelenks (4) das Messer (1) in waagerechter Klingenstellung trägt.

**Claim**

1. A fine topper device for hoeing crops, in particular beets, which has a bar (7) mounted in such a way that it can be pivoted up and down about an axis extending transversely with respect to the direction of travel, a sensor (2) and a blade (1), wherein the sensor (2) and the blade (1) are carried by a parallelogram linkage (7, 13, 3, 14), characterised in that the bar (7), with the sensor (2) rigidly secured thereto, is in the form of a movable lower bar (7) which is slightly inclined with respect to the horizontal, in the parallelogram linkage (7, 13, 3, 14), wherein the side of the parallelogram (13) which is at the front in the direction of travel is arranged immovably with respect to the carrier arrangement of the tractor vehicle and slightly inclined with respect to the vertical, and that the side of the parallelogram (14) which is in opposite relationship to said immovable side (13) carries the blade (1) in a horizontal blade position, beneath a pivot (4) connecting said side (14) to the bar (7).

**Revendication**

1. Décolleteuse affineuse pour plantes sarclées, en particulier des betteraves, comprenant une tige (7) pouvant être basculée vers le haut et vers le bas autour d'un axe transversal à la direction de circulation, ainsi qu'un palpeur (2), ainsi qu'un couteau (1), le palpeur (2) et le couteau (1) étant portés par un parallèlogramme articulé, caractérisée en ce que la tige (7) est conçue avec le palpeur (2) y fixé de façon rigide comme tige (7) inférieure, légèrement inclinée par rapport à l'horizontale, du parallèlogramme articulé (7, 13, 3, 14), le côté (13) du parallèlogramme situé vers l'avant dans la direction de circulation étant disposé fixe par rapport au dispositif porteur du tracteur et légèrement incliné par rapport à la verticale, et que le côté (14) du parallèlogramme opposé au côté (13) immobile du parallèlogramme porte le couteau (1) dans une position horizontale de lame au-dessous d'une articulation (4) qui le relie à la tige (7).

Fig. 1

Fig. 2